# EUROPÄISCHE PATENTANMELDUNG

(11) **EP 0 779 334 A1**
(43) Veröffentlichungstag der Anmeldung: **18.06.1997**
(21) Anmeldenummer: 96119662.3
(22) Anmeldetag: 07.12.1996
(51) Int. Cl.: C08L 27/12, H01B 3/44, H01R 4/70

(54) **Polymergemisch und seine Verwendung für hochtemperaturbeständige Verbindungs- und Dichtungselemente**

(30) Priorität: 13.12.1995 DE 19546511
(71) Anmelder: EILENTROPP KG, D-51676 Wipperfürth (DE)
(72) Erfinder: Eilentropp, Heinz, 51676 Wipperfürth (DE); Schwamborn, Klaus, 51676 Wipperfürth (DE); Sikora, Manfred, 51688 Wipperfürth (DE); Steffes, Walter, 51676 Wipperfürth (DE)

(57) **Zusammenfassung**

Ein Polymergemenge auf der Basis von aus der Schmelze nicht verarbeitbaren Fluorpolymeren und solchen, die thermoplastisch verformbar sind, enthält einen Anteil thermoplastisch verformbarer Fluorpolymere bis zu 100 Gew. %, insbesondere 1 bis 30 Gew. %.

## Beschreibung

Die vorliegende Erfindung befaßt sich mit einem Polymergemenge und dessen Verwendung zur Herstellung von hochtemperaturbeständigen Formkörpern.

Zur Herstellung einer Anschluß-, Abschluß- oder Verbindungsstelle für elektrische Kabel und Leitungen, die hohen Umgebungstemperaturen ausgesetzt sind, ist es bereits bekannt (DE-PS 30 41 657), an der betreffenden Stelle des oder der abgesetzten Kabel- oder Leitungsenden über deren isolierende Umhüllung ein oder mehrere Formkörper aus einem thermoplastischen Kunststoff, der aus der Schmelze verarbeitbar und verbindbar ist, mit gegenüber dem Werkstoff der Umhüllung niedrigerem Schmelzbereich, zu schieben und darüber einen Formkörper aus einem aus der Schmelze nicht verarbeitbaren Fluorpolymeren aufzubringen. Bei einem anschließenden Erwärmen von außen her und gleichzeitigem Aufbringen von Druck auf das im Innern befindliche leichter schmelzende Polymermaterial wird dieses schmelzflüssig und füllt in diesem schmelzflüssigen Zustand alle im Innern des äußeren Rohres befindlichen Hohlräume aus. Gleichzeitig verbindet sich aber dieser schmelzflüssige Werkstoff, beispielsweise aus einem thermoplastischen Fluorpolymeren, mit der Innenwandung des äußeren Rohres, so daß in diesem Grenzbereich eine sichere, feuchtigkeitsdichte Verbindung entsteht. Kabelmuffen beispielsweise, die nach diesem Prinzip aufgebaut sind, haben sich seit Jahren bewährt, bis zu Temperaturen von 300° C ist die Abdichtung der Verbindungsstelle einwandfrei, das gilt sowohl für den Schutz gegen Feuchtigkeit als auch gegen aggressive Medien.

Im Zuge neuerer Entwicklungen jedoch, insbesondere auf dem Gebiet der Sensortechnik, etwa für Temperatur- oder Gassensoren, muß mit höheren Temperaturen, d. h. oberhalb von 300° C gerechnet werden, die besonders hohe Anforderungen an gasdichte Verbindungs-, Abschluß- oder Einführungsbereiche von elektrischen Kabeln und Leitungen stellen. Diese Anforderungen sind mit der bisherigen Technik oft nur schwer zu lösen.

Aber auch für feuchtigkeitsdichte Abschlüsse von aus hochtemperaturbeständigen Fluorkunststoffen bestehenden rohrförmigen Umhüllungen von langgestreckten metallischen Profilen, etwa sog. Tauchrohren, wie sie in der chemischen Industrie verwendet werden, oder für Metalldrahtfühler zur Anzeige des Verschleißes von Bremsbelägen bei Kraftfahrzeugen, kommt es darauf an, betriebssichere Verbindungen im Grenzbereich aneinanderstoßender Flächen von beliebig geformten Profilen zu gewährleisten.

In zunehmendem Maße werden hochtemperaturbeständige Werkstoffe auf Basis von Fluorpolymeren auch für die Isolierung oder Umhüllung elektrischer Kabel und Leitungen, z. B. bei den sog. Heizkabeln, oder bei der Herstellung von Röhrchen verwendet. Sind es Fluorpolymere, die aus der Schmelze nicht verarbeitbar sind, wird die Isolierung/Umhüllung oder Rohrwandung aus gesinterten oder ungesinterten Bändern hergestellt (CH-PS 562 098, DE-PS 32 14 447), wobei diese Bänder auch mikroporös sein können (DE-OS 44 14 052). Auch hier kommt es darauf an, den Grenzflächenbereich der Wickellagen dicht und betriebssicher dauerhaft miteinander zu verbinden.

Ausgehend von diesem Stand der Technik liegt der Erfindung die Aufgabe zugrunde, Grenzflächenbereiche zwischen metallischen Formteilen und/oder nichtmetallischen hochtemperaturbeständigen Kunststoffen bzw. hieraus hergestellten Formteilen auch bei extremen Beanspruchungen durch Umgebungstemperatur, Umgebungsdruck und aggressive Medien dauerhaft zu verbinden bzw. abzudichten.

Gelöst wird diese Aufgabe gemäß der Erfindung durch ein Polymergemenge auf der Basis von aus der Schmelze nicht verarbeitbaren Fluorpolymeren und solchen, die thermoplastisch verformbar sind, wobei der Anteil thermoplastisch verformbarer Fluorpolymere am Polymergemenge bis zu 100 Gew.% beträgt. Ein solches Polymergemenge, das im wesentlichen aus einem aus der Schmelze nicht verarbeitbaren Fluorpolymeren, wie beispielsweise dem Polytetrafluorethylen oder einem Polytetrafluorethylen, das mit höchstens 2 Gew.% Fluormonomeren modifiziert ist, wobei als Fluormonomere solche auf Basis Hexafluorpropylen, Perfluorbutylethylen oder Perfluoralkyl-Perfluorvinyl-Ether, deren Perfluoralkylgruppen 1 bis 12 Kohlenstoffatome enthalten, enthält, ist für den angestrebten Temperaturbereich problemlos einsetzbar. Die als Komponente im Gemenge verwendeten thermoplastisch verformbaren Fluorpolymere werden in Durchführung der Erfindung vorteilhaft solche auf der Basis von Polyvinylidenfluorid und Polytrifluorchlorethylen sein, sowie von thermoplastischen Copolymeren des Vinylidenfluorids und des Trifluorchlorethylens. Besonders geeignet sind aber auch solche Fluorpolymere auf der Basis von Copolymeren des Tetrafluorethylens mit Ethylen, Hexafluorpropylen sowie Perfluor(alkylvinyl)ethern mit Perfluoralkylresten von 1 bis 10 Kohlenstoffatomen, insbesondere mit Perfluor (propylvinyl)ether. Da es für die Erfindung auf ein Polymergemenge ankommt kann es oft zweckmäßig sein, von Vorprodukten der genannten Materialien auszugehen, d. h. von solchen Produkten, die als Polymerisate unmittelbar aus dem Reaktor anfallen.

Diese Komponenten im Gemenge dienen zur Brückenbildung einerseits zwischen den für das Polymergemenge wesentlichen pulver- bis granulatförmigen Teilchen des aus der Schmelze nicht verarbeitbaren Fluorpolymeren und zum anderen an der Oberfläche eines aus einem solchen Polymergemenge hergestellten Formkörpers als Haftbrücken im Grenzbereich zu anderen Formkörpern aus Metall oder Kunststoffen.

Entsprechend den gestellten Anforderungen an innerer Bindung der pulver- bis granulatförmigen Teilchen des aus der Schmelze nicht verarbeitbaren Fluorpolymeren sowie der Haftfähigkeit eines aus solchen Fluorpolymeren hergestellten Formkörpers kann man innerhalb der oben angegebenen Grenze den Anteil an thermoplastisch verformbaren Fluorpolymeren variieren, als besonders vorteilhaft für die Zwecke der Erfindung hat sich dabei ein Anteil an aus der Schmelze verarbeitbaren Fluorpolymeren von 1 bis 30 Gew.% erwiesen.

Selbstverständlich ist es auch möglich und oft von besonderem Vorteil, wenn dem Polymergemenge zusätzliche Füllstoffe zugegeben werden, zur Erhöhung der mechanischen Festigkeit, beispielsweise auch bei hohen Temperaturen haben sich anorganische Füllstoffe als vorteilhaft erwiesen, z. B. Glaspartikel in Faserform.

Wesentlich für die Erfindung ist ferner, daß aus dem beschriebenen Polymergemenge Formkörper hergestellt werden, die dem jeweiligen Anwendungszweck durch äußere Formgebung, Abmessungen usw. angepaßt sind. Hierbei werden die pulver- bis granulatförmigen Teilchen der aus der Schmelze nicht verarbeitbaren sowie der thermoplastisch verformbaren Polymere zu einem Polymergemisch verpreßt. Ein solcher Formkörper kann dann als hochtemperaturbeständiges Verbindungs- und/oder Dichtelement z. B. zwischen entsprechenden hochtemperaturbeständigen Kunststoffen eingefügt und mit diesen im Grenzflächenbereich dauerhaft verbunden werden. Aber auch, wenn es sich um metallische Formteile handelt, beispielsweise im Sondenbereich, wo es darauf ankommt, elektrische Leitungen gasdicht in ein metallisches Gehäuse einzuführen, gewährleistet die Erfindung eine hochtemperaturbeständige gasdichte und gegen aggressive Medien unempfindliche Verbindung zwischen dem metallischen Gehäuse und der Kunststoffisolierung der eingeführten Adern eines Kabels. Das gilt auch dann, wenn die Aderisolierung selbst aus einem aus der Schmelze nicht verarbeitbaren Fluorpolymeren hergestellt ist.

Eine andere Möglichkeit ist die, daß das Polymergemisch als hochtemperaturbeständiges Verbindungs- und/oder Dichtungselement zwischen entsprechend hochtemperaturbeständigen Kunststoff- oder metallischen Formteilen einpreßbar ist. Damit entsteht der Formkörper unmittelbar am Ort seines Einsatzes.

Die zur Abdichtung und Verbindung dienenden Formkörper werden zweckmäßig durch Pressen des erfindungsgemäßen Polymergemenges zu einem Polymergemisch hergestellt, in der Matrix, beispielsweise aus Polytetrafluorethylen, sind dann die Materialteilchen aus dem niedriger schmelzenden Polymermaterial eingelagert. In dieser Form ist der Formkörper sinterbar, im Sinterprozeß erfolgt die Brückenbildung durch das aufschmelzende, thermoplastische Fluorpolymeres sowie der Aufbau von Haftbrücken auf der äußeren Umfläche des Formkörpers.

Im Falle der Anwendung der Erfindung auf Isolierungen oder Mäntel für elektrische und/oder optische Kabel werden diese z. B. aus einer ein- oder mehrlagigen Bandbewicklung hergestellt. Die geschilderten Haftbrücken sind hierbei wesentlich zur dichten Verbindung der einzelnen Bandlagen untereinander aber auch mit weiteren im Kabelaufbau vorgesehenen Schichten, die an die Isolierung oder den Mantel angrenzen. Handelt es sich bei dem verwendeten Bandmaterial um gereckte, mikroporöse Bänder, dann bilden die nach der Erfindung im Polymergemisch eingelagerten thermoplastischen Fluorpolymere ein die Teilchen aus dem aus der Schmelze nicht verarbeitbaren Fluorpolymeren verklebendes Netzwerk, was zur Stabilisierung des Bandmaterials beiträgt.

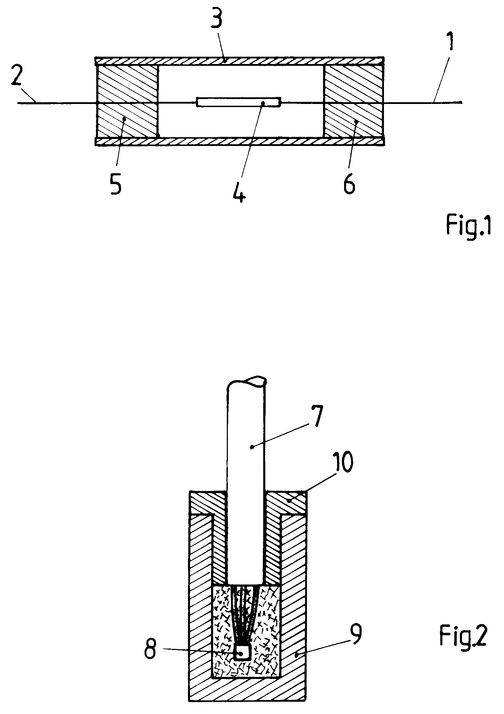

Die Erfindung sei anhand der in den Figuren 1 bis 7 dargestellten Ausführungsbeispiele näher erläutert.

Die Fig. 1 zeigt eine Verbindungsmuffe für elektrische Kabel, deren Isolierung beispielsweise aus einem hochtemperaturbeständigen Werkstoff besteht. Die beiden Kabelenden 1 und 2 sind innerhalb des Muffenkörpers 3 über eine Löt- oder Klemmverbindung 4 miteinander verbunden. Zur Längsabdichtung des Muffenkörpers 3, der beispielsweise aus Metall bestehen kann, aber auch aus einem Kunststoff, beispielsweise einem Polytetrafluorethylen, hergestellt sein kann, sind stirnseitig eingeschoben Formkörper 5 und 6, die entsprechend der Erfindung aus einem aus einem Polymergemenge gepreßten Polymergemisch auf Basis aus der Schmelze nicht verarbeitbaren Fluorpolymeren und solchen, die thermoplastisch verformbar sind, bestehen. Zur Montage solcher Verbindungsmuffen geht man beispielsweise so vor, daß über die Kabelenden zunächst der Muffenkörper 3 sowie die mit einer entsprechenden Bohrung versehenen Formkörper 5 und 6 übergeschoben, anschließend die Verbindung der Leiterenden der Kabel 1 und 2 vorgenommen und schließlich über diese Verbindungsstelle der rohrförmige Muffenkörper 3 zurückgeschoben wird. Von den Enden her werden die Formkörper 5 und 6 in das Muffenrohr eingeführt und schließlich wird eine Temperaturbehandlung der aus dem erfindungsgemäßen Polymergemisch bestehenden Formkörper 5 und 6 vorgenommen. Eine solche Temperaturbehandlung, etwa zwischen 300° und 400° C führt zu einer Sinterung der aus der Schmelze nicht verarbeitbaren Fluorpolymerkomponente, gleichzeitig aber auch zu einem Aufschmelzen des im Polymergemisch verteilten thermoplastisch verformbaren Fluorpolymeranteiles mit hierdurch bewirkter mechanisch fester und dichter Verbindung zwischen der äußeren Oberfläche der eingeführten Kabel 1 und 2 sowie zur inneren Oberfläche des rohrförmigen Muffenkörpers 3.

Abweichend von dem in der Fig. 1 dargestellten Verbindungsmuffe zeigt die Fig. 2 einen sogenannten Thermofühler im betriebsfähigen Zustand, bei dem die Erfindung verwirklicht ist. Die Adern des Kabels 7 sind, wie bei solchen Fühlern üblich, an der Stelle 8 zusammengefaßt, der feuchtigkeitsgeschützte, druckdichte Abschluß des die Adern aufnehmenden Gehäuses 9 aus Metall oder Kunststoff erfolgt durch den hier stopfenartig ausgebildeten Formkörper 10 aus einem Polymergemisch entsprechend der Erfindung. Die Verbindung zur inneren Oberfläche des Gehäuses 9 sowie zur Außenfläche des Kabels 7 wird wiederum durch die im Formkörper 10 beim Sinterprozeß entstehenden Brücken aus dem thermoplastischen Fluorpolymeren sichergestellt.

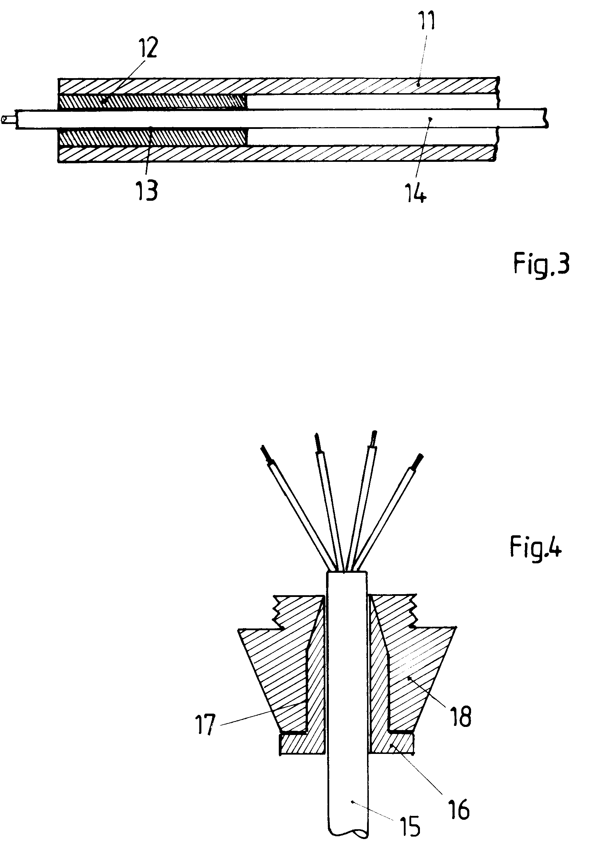

Besonders hohe Anforderungen hinsichtlich Gasdichtigkeit, Dichtigkeit gegen aggressive Medien und thermische Beanspruchungen werden an elektrische Anschlüsse auf dem weiten Gebiet der Sensortechnik gestellt. Das gilt in gleicher Weise für solche Sensoren, die metallisch gekapselt sind, als auch für solche, die nach außen durch Gehäuse aus Kunststoff, insbesondere aus hochtemperaturbeständigem Kunststoff geschützt sind. Ein hierauf bezogenes Ausführungsbeispiel zeigt die Fig. 3. Zur Abdichtung des metallischen Gehäuses 11, das beispielsweise zur Aufnahme eines Gas- oder Temperatursensors dient, ist der Formkörper 12 eingebracht, etwa ein Preßkörper aus dem gemäß der Erfindung vorgeschlagenen Polymergemisch, der eine innere Bohrung 13 zum Einführen der Anschlußleitung 14 in das metallische Gehäuse 11 und damit zum nicht dargestellten Sensor aufweist. Durch entsprechende Temperaturbehandlung des Formkörpers 12 erfolgt, wie bereits ausgeführt, eine druckdichte Verbindung zwischen der äußeren Oberfläche des Formkörpers 12 und der inneren Oberfläche des metallischen Gehäuses 11 sowie im Bereich der Bohrung 13 zwischen der Oberfläche der Leitung 14 und der inneren Oberfläche der Bohrung 13.

Mitunter kann es vorteilhaft sein, die innere Oberfläche des metallischen Gehäuses 11 durch Rillen, Riefen, durch ein Gewinde und dergl. im Bereich des Formstückes 12 zu verformen, diese Maßnahmen tragen weiter zu einer zuverlässigen gasdichten Verbindung an der Grenzfläche zwischen Metall und Kunststoff bei.

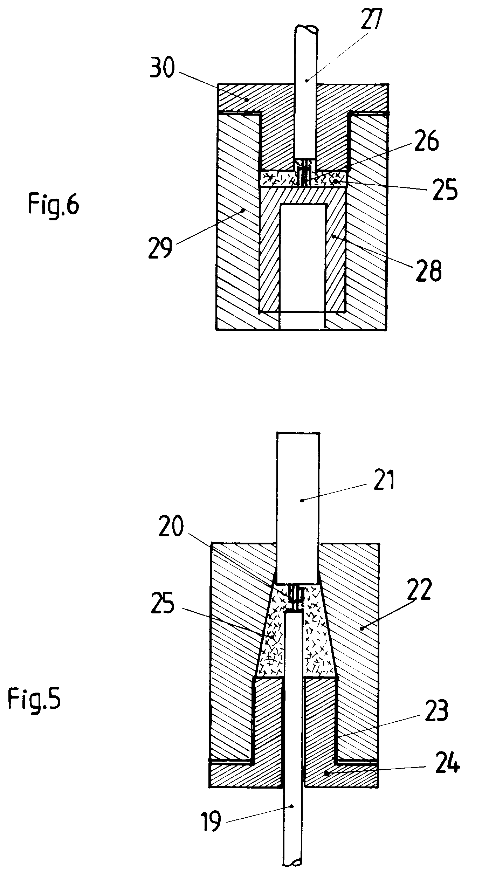

Eine Leitungseinführung anderer Art verdeutlicht die Fig. 4. Die gasdichte und feuchtigkeitssichere Einführung des Kabels 15 wird durch das stopfenartig ausgebildete Formteil 16 sichergestellt, das erfindungsgemäß zusammengesetzt ist und nach dem Einführen in die Bohrung 17 der Verschraubung 18, die gemeinsamen Berührungsflächen zwischen Kabel 15, Formteil 16 und Verschraubung 18 dicht und dauerhaft fest verbindet.

Die Fig. 5 veranschaulicht einen ein- oder mehradrigen Stecker mit der Anschlußleitung 19, deren Leiter 20 mit dem oder den Steckerstift(en) 21 verlötet ist. Das Steckergehäuse ist mit 22 bezeichnet, in eine entsprechende Bohrung 23 des Steckergehäuses 22 ist das erfindungsgemäß aus einem Polymergemisch hergestellte Formteil 24 eingeführt. Dieses Formteil sichert durch den Anteil in der Mischung vorhandenen thermoplastisch verarbeitbaren Fluorpolymeres die druckdichte Verbindung zum Steckergehäuse 22, das beispielsweise ebenfalls aus einem Fluorpolymeren, vorzugsweise hochtemperaturbeständig, hergestellt ist. Mit 25 ist eine geeignete Füllmasse bezeichnet, die den Bereich Anschlußstecker-elektrischer Leiter dichtend umgibt.

Eine dem in der Fig. 5 dargestellten Stecker angepaßte Kupplung zeigt die Fig. 6. Der Leiter 26 der Anschlußleitung 27 ist mit dem Gegenkontakt 28 für den Stecker 21 elektrisch leitend verbunden. In das Kupplungsgehäuse 29, z. B. aus Polytetrafluorethylen, ragt der Dichtungsformkörper 30 hinein, der entsprechend der Erfindung ausgebildet und mit den begrenzenden Umflächen des Kupplungsgehäuses 29 sowie der Oberfläche der Anschlußleitung 27 gas- und feuchtigkeitsdicht verbunden ist.

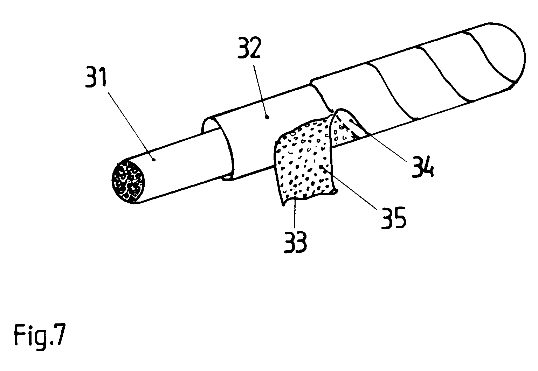

Die Fig. 7 schließlich zeigt ein elektrisches Kabel mit einem Leiter 31 und einer Isolierung 32, die durch Umwickeln eines Bandes 33 in mehreren Lagen mit einer Überlappung 34 der jeweiligen Bandkanten entstanden ist. Falls für den jeweiligen Anwendungsfall erforderlich, kann das Band 33 auch gereckt und dadurch mit den Mikroporen 35 ausgestattet sein. Entsprechend der Erfindung ist auch dieses Band 33 ein aus dem erfindungsgemäßen Polymergemenge hergestelltes Formteil, mit den im Polymergemisch eingelagerten Kontaktbrücken.

Die Erfindung ist selbstverständlich nicht auf die in den Fig. dargestellten Ausführungsformen beschränkt. Aus dem erfindungsgemäßen Polymergemenge können durch Verpressen zu einem Polymergemisch beliebige Formkörper hergestellt werden, ob in einer Vorfertigung oder am Montageort, die sich durch eine besondere Haftfähigkeit zu benachbarten Umflächen unter extremen äußeren Bedingungen, wie hohe Temperaturen, Gasdichtigkeit, Feuchtigkeitseinwirkung, Druck und Einfluß aggressiver Medien, auszeichnen.

## Patentansprüche

1. Polymergemenge auf der Basis von aus der Schmelze nicht verarbeitbarer Fluorpolymeren und solchen, die thermoplastisch verformbar sind, wobei der Anteil thermoplastisch verformbarer Fluorpolymere am Polymergemenge bis zu 100 Gew.% beträgt.

2. Polymergemenge nach Anspruch 1, dadurch gekennzeichnet, daß der Anteil an thermoplastisch verformbaren Fluorpolymeren im Gemenge 1 bis 30 Gew.% beträgt.

3. Polymergemenge nach Anspruch 1 oder 2, gekennzeichnet durch pulver- bis granulatförmige Teilchen des aus der Schmelze nicht verarbeitbaren Fluorpolymeren zwischen denen entsprechend pulverbis granulatförmige Teilchen des thermoplastisch verarbeitbaren Fluorpolymeren verteilt eingelagert sind.

4. Polymergemenge nach Anspruch 1 oder einem der folgenden, gekennzeichnet durch einen Zusatz von anorganischen Füllstoffen.

5. Polymergemenge nach Anspruch 3, dadurch gekennzeichnet, daß als thermoplastisch verarbeitbare, pulver- bis granulatförmige Fluorpolymere solche auf der Basis von Polyvinylidenfluorid und Polytrifluorchlorethylen sowie von thermoplastischen Copolymeren des Vinylidenfluorides und des Trifluorchlorethylens oder deren Vorprodukte verwendet sind.

6. Polymergemenge nach Anspruch 3, dadurch gekennzeichnet, daß als thermoplastisch verarbeitbare pulver- bis granulatförmige Fluorpolymere solche auf der Basis von Copolymeren des Tetrafluorethylens mit Ethylen, Hexafluorpropylen sowie Perfluor(alkylvinyl)ethern mit Perfluoralkylresten von 1 bis 10 Kohlestoffatomen, insbesondere mit Perfluor(propylvinyl)ether, oder deren Vorprodukte verwendet sind.

7. Aus einem Polymergemenge nach Anspruch 1 oder einem der folgenden hergestellter Formkörper, bei dem die pulver- bis granulatförmigen Teilchen der aus der Schmelze nicht verarbeitbaren sowie der thermoplastisch verformbaren Polymere zu einem Polymergemisch verpreßt sind.

8. Formkörper nach Anspruch 7, dadurch gekennzeichnet, daß die pulver- bis granulatförmigen Teilchen unter Temperatureinwirkung gesintert sind.

9. Formkörper nach Anspruch 7 oder 8, dadurch gekennzeichnet, daß das verpreßte Polymergemisch eine Bandform aufweist.

10. Formkörper nach Anspruch 9, dadurch gekennzeichnet, daß das Band gereckt ist.

11. Formkörper nach Anspruch 9 oder 10, dadurch gekennzeichnet, daß das Band mikroporös ist.

12. Formkörper nach Anspruch 7 oder 8, dadurch gekennzeichnet, daß das Polymergemisch als hochtemperaturbeständiges Verbindungs- und/oder Dichtungselement zwischen entsprechend hochtemperaturbeständigen Kunststofformteilen einfügbar ausgebildet ist.

13. Formkörper nach Anspruch 7 oder 8, dadurch gekennzeichnet, daß das Polymergemisch als hochtemperaturbeständiges Verbindungs- und/oder Dichtungselement zwischen metallischen Formteilen einfügbar ausgebildet ist.

14. Formkörper nach Anspruch 7 oder 8, dadurch gekennzeichnet, daß das Polymergemisch zu einem hochtemperaturbeständigen Verbindungs- und/oder Dichtungselement zwischen entsprechend hochtemperaturbeständigen Kunststoff- oder metallischen Formteilen einpreßbar ist.

15. Formkörper nach Anspruch 8 oder einem der folgenden als hochtemperaturbeständiges Verbindungs- und/oder Dichtungselement in oder bei Einführungs-, Anschluß-, Abschluß- oder Verbindungsstellen für ein- oder mehradrige elektrische/optische Kabel oder Leitungen.

16. Formkörper nach Anspruch 15, dadurch gekennzeichnet, daß die Einführungs-, Anschluß-, Abschluß- oder Verbindungsstellen Bereiche oder Teile von Sensoren sind.
